# EUROPEAN PATENT APPLICATION

(11) **EP 2 224 643 A1**
(43) Date of publication of application: **01.09.2010**
(21) Application number: 07855819.4
(22) Date of filing: 26.12.2007
(51) Int. Cl.: H04L 12/54

(54) **CONTENT PUBLISHING AND STORING METHOD FOR INTERACTIVE PERSONAL TELEVISION MEDIA DELIVERY SYSTEM**

(30) Priority: 05.12.2007 CN 200710178832
(71) Applicant: ZTE Corporation, Shenzhen, Guangdong 518057 (CN)
(72) Inventor: LI, Mujin, Guangdong 518057 (CN)
(74) Representative: Vossius & Partner
(86) International application number: PCT/CN2007/003817
(87) International publication number: WO 2009/070936

(57) **Abstract**

The present invention relates to a content publishing and storing method for the interactive personal television media delivery system, the method includes the following steps: obtaining a slicing strategy of a stream media source file and a sliced file storage strategy; slicing the stream media source file using the slicing strategy, and storing the sliced files using the sliced file storage strategy. The content publishing and storing method for the interactive personal television media delivery system of the present invention reduces the time of waiting for the play of the user, is helpful for reasonably distributing network resources, and the storage efficiency is improved.

## Description

### Field of the Invention

The present invention relates to the field of interactive personal television technology, in particular to a content publishing and storing method for the interactive personal television media delivery system.

### Background of the Invention

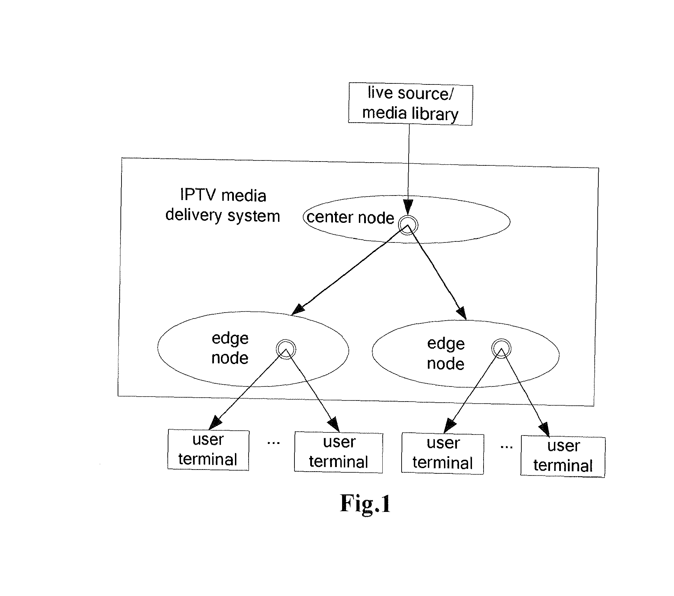

The Interactive Personal Television (IPTV) service is a service over IP network in which multimedia contents from a provider is integrated at an IPTV service application platform and then shown to a user using an IPTV terminal, i.e., a user terminal. Along with the continuous development of the IPTV service, not only the number of IPTV users but also the number of the stream media source files of an IPTV program source is persistently increasing. In an IPTV system, the operation of publishing the stream media source files of a program source to a user is mainly realized by the IPTV media delivery system. The IPTV media delivery system is characterized by a large throughput of transmitted data and a strict real-time requirement. However, a normal server is generally able to provide service to only hundreds of users due to the limitation of CPU, memory, network and storage unit, and thus can not meet the need of a large scale application of the IPTV media delivery system, while a stream media server of high performance is very expensive., Thus the current IPTV media delivery system employs distributed deployment scheme with hierarchized nodes. As shown in Fig.1, a typical IPTV media delivery system comprises an IPTV media delivery system center node and IPTV media delivery system edge nodes, shortened as center node and edge nodes respectively, for storing the stream media source files and relaying live channels, and distributing to the users, wherein the center node is directly connected to a media library or a live source, and is able to obtain the stream media source files from the media library, which requires a huge storage space and a broad access bandwidth, and thus the service is comparatively expensive; an edge node is directly connected to user terminals, and has a certain requirement on storage space and access bandwidth. Generally, an edge node stores only the stream media source files of comparatively high click rate, i.e., the stream media source files of comparatively high heat statistic; while the stream media source files of comparatively low heat statistic are stored in the center node. In a practical IPTV delivery system, the center nodes may further be classified into first class center nodes, second class center nodes, etc., according to the hop count to the live source/media library or the region.

When a user demands the IPTV media delivery system to provide stream media source files of comparatively low heat statistic, it needs to download the stream media source files to an edge node from the center node where the stream media files are stored, then download the stream media source files to the user terminal from the edge node, resulting in a long service delay, and thus the user has to wait for a long time for the play.

### Summary of the Invention

In view of the above description, the present invention mainly aims at providing a content publishing and storing method for the IPTV media delivery system, and the method is able to overcome the shortcoming of the prior art, wherein all stream media source files have to be pushed/pulled to an edge node from a center node, or have to be pulled to a user terminal directly from the edge node so as to provide a service to a user.

To achieve the above object, the technical scheme of the present invention is realized in the following way:
A content publishing and storing method for the interactive personal television media delivery system comprises the following steps: A, obtaining a slicing strategy of a stream media source file and a sliced file storage strategy; B, slicing the stream media source file using the slicing strategy, and storing the sliced files using the sliced file storage strategy.

Before step A, the content publishing and storing method for the interactive television media system of the present invention further comprises: obtaining the basic information of the stream media source file, wherein the basic information of the stream media source file comprises one or more of the following items: the space size of the stream media source file, or the number of media streams contained in the stream media source file, or the play time of each media stream, or the format type of each media stream, or the play time of the whole source file.

After step B, the content publishing and storing method for the interactive television media system of the present invention further comprises: storing the information of the sliced files into a file and storing the file into the interactive personal television media delivery system.

In step A of the content publishing and storing method for the interactive personal television media delivery system of the present invention, the slicing strategy is an equal-time-length slicing strategy.

In step A of the content publishing and storing method for the interactive personal television media delivery system of the present invention, the slicing strategy is an equal-space-size slicing strategy.

In step A of the content publishing and storing method for the interactive personal television media delivery system of the present invention, the sliced file storage strategy is a node-designating strategy, or an heat-statistic-based node selecting strategy, or an all-node strategy.

In step B of the content publishing and storing method for the interactive personal television media delivery system of the present invention, slicing the stream media source file using the slicing strategy comprises: reading decoding flags of all stream media packages in the stream media source file; placing the stream media packages into the range of one or more sliced files according to timestamps in the decoding flags of all the stream media packages and generating a slicing task list accordingly; creating one or more slicing threads according to the slicing task list, partitioning all the stream media packages into network transport stream media packages and writing them into corresponding sliced files.

Wherein, partitioning all the stream media packages into the network transport stream media packages comprises partitioning the stream media packages into the network transport stream media packages according to a network transport protocol followed by the interactive personal television media delivery system.

The content publishing and storing method for the IPTV media delivery system according to the present invention slices stream media source files into sliced files and stores them on the center node or edge nodes of the IPTV media delivery system. While viewing a part of the sliced files stored at a certain edge node, a user can push/pull the other part of the sliced files from other edge nodes or the center node, thus the time of waiting for the play of the user is reduced. Through the segment file storage mode, multiple threads slicing transmission of the stream media source files is realized by pushing/pulling the sliced files from a plurality of edge nodes or the center nodes at the same time, resulting in a high transmission rate which is helpful for reasonably distributing network resources. In addition, the storage mode of the sliced files enables an edge node to store only a small number of the sliced files of the stream media source files, thus the edge node can store more stream media source files and the storage efficiency is improved.

### Brief Description of the Drawings

Fig.1 is a topology structure view of an IPTV media delivery system;
Fig.2 is a flow chart of the content publishing and storing method for the IPTV media delivery system of the present invention;
Fig.3 is a flow chart of the operation of slicing the stream media source file in the content publishing and storing method for the IPTV media delivery system of the present invention.

### Detailed Description of Embodiments

The present invention is further described in detail in connection with drawings and embodiments.

The basic idea of the present invention lies in that a slicing strategy of a stream media source file and a storage strategy are obtained firstly, then the stream media source file is sliced according to the slicing strategy, and the sliced files are published and stored according to the storage strategy.

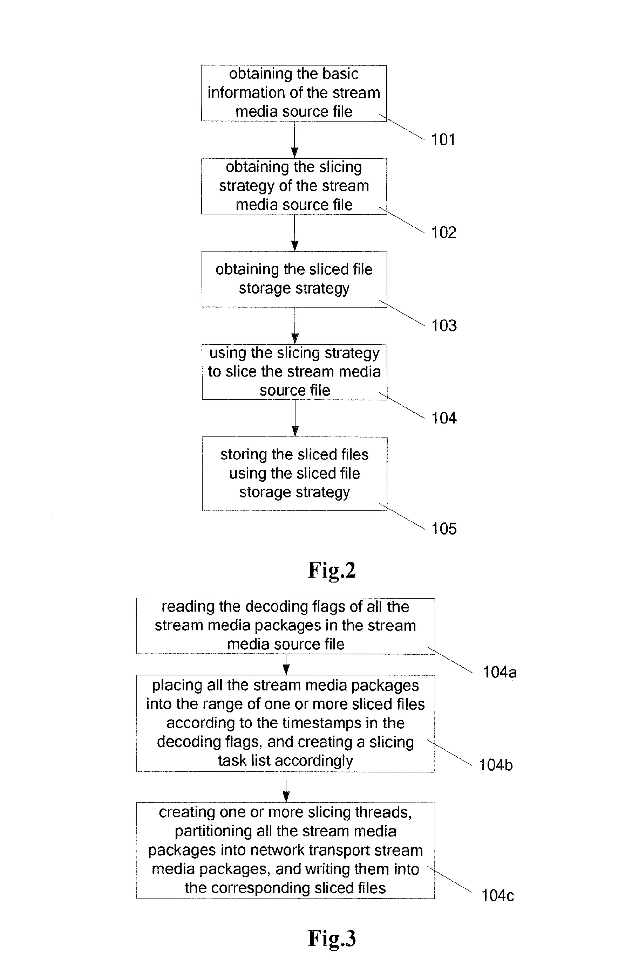

As shown in Fig.2, the content publishing and storing method of the IPTV media delivery system of the present invention comprises the following steps:
Step 101, the center node of the IPTV media delivery system obtains the basic information of the stream media source file.

The basic information of the stream media source file comprises the space size of the stream media source file, the number of media streams contained in the stream media source file, the play time of each media stream, the format type of each media stream, the play time of the whole source file, etc., which can be acquired directly from the stream media source file, thus the method for reading the basic information is similar to that in the prior art. In addition, the basic information of the stream media source file also comprises heat statistic, which is statistically obtained and updated over time by the IPTV media delivery system or other statistic institutes.

Generally, a stream media source file comprises one or more media streams which are packaged in the form of stream media packages, the structure of stream media packages are different for different format types of the media stream, and a stream media package generally comprises a package header part and a payload part, wherein the package header part carries the basic information of the stream media package, such as the format of the media stream, the serial number of the stream media package, timestamp, etc.. The package header part can also be referred to as the decoding flag of the stream media package. The timestamps of the stream media packages belonging to the same media stream are identical, thus a plurality of the stream media packages belonging to the same media stream can be recognized based on the timestamps. The basic information of the stream media source file obtained in this step will be selectively utilized in subsequent steps according to the actual slicing strategy or sliced file storage strategy. If the basic information will not be utilized in subsequent steps, for instance, sliced file storage strategy being selected to be an all-node strategy, the heat statistic information of the stream media source file will not be necessarily utilized, and the corresponding operation may be omitted.

Step 102, the center node of the IPTV media delivery system obtains the slicing strategy of the stream media source file.

Wherein, the slicing strategy of the stream media source file may comprise an equal-time-length slicing strategy and an equal-space-size slicing strategy, wherein in the equal-time-length slicing strategy, all the sliced files belonging to the same stream media source file consume the same play time, and in the equal-space-size slicing strategy, all the sliced files belonging to the same stream media source file occupy the same space size.

The slicing strategy also has other selecting modes, for example, the size or the time length of the sliced file being selected based on heat statistic, or a single media stream in the stream media source file being partitioned into one sliced file, and so on.

The center node of the IPTV media delivery system accepts a slicing instruction from the administrator and obtains a slicing strategy from the slicing instruction. When the slicing instruction does not specify any slicing strategy, slicing may be performed based on a predefined default slicing strategy, which can be, for instance, the equal-time-length slicing strategy. The present invention applies no limitation to the slicing strategy, and the particular slicing strategy can be adjusted based on the practical circumstance.

Step 103, the center node of the IPTV media delivery system obtains the sliced file storage strategy.

The sliced fie storage strategy comprises a node designating strategy, an heat-statistic-based node selecting strategy and an all-node strategy, etc., wherein the node designating strategy designates the center node or an edge node for storing one or more sliced files, for instance, the sliced files of certain stream media source files only can be played in the regions covered by some edge nodes. The heat-statistic-based node selecting strategy stores a plurality of the sliced files of the stream media source file with high heat statistic in the edge node of the IPTV media delivery system, while stores the first one or several sliced files of the stream media source file of low heat statistic in the edge node of the IPTV media delivery system, and stores the other sliced files of the stream media source file of low heat statistic in the center node of the IPTV media delivery system, thus a user can download the major part of the sliced files or all the sliced files directly from the edge node at a high transmission rate when viewing the stream media source file of high heat statistic; in the case of viewing the stream media source file of low heat statistic, when viewing the first one or several sliced files stored in the edge node of the IPTV media delivery system, the user can push/pull other sliced files from the center node, thereby avoiding the play waiting time of the user. The all-node strategy stores all the sliced files of one stream media source file in all the edge nodes, without any need for considering the selection of the storage nodes.

The sliced file storage strategy can be specified in the slicing instructions, or can be adjusted according to practical circumstances, for example, adjusting the storage strategy according to the storage space occupation condition of the nodes and the accessing traffic of the nodes.

Step 104, the center node of the IPTV media delivery system uses the slicing strategy to slice the stream media source file.

The slicing strategy is already determined in Step 102. In one embodiment of the present invention, the slicing strategy is the equal-time-length slicing strategy, the operation of slicing the stream media source file using this slicing strategy is shown in Fig.3, and comprises the following steps:
Step 104a, the center node of the IPTV media delivery system reads the decoding flags of all the stream media packages in the stream media source file.

Step 104b, the center node of the IPTV media delivery system place all the stream media packages into the range of one or more sliced files according to the timestamps in the decoding flags of all the stream media packages, and generates a slicing task list accordingly.

According to the timestamps, all the stream media packages are place into the range of one or more sliced files, for example, when the sum of the play time of the first to fifth stream media packages is equal to the specified time length of one sliced file, the first to fifth stream media packages are placed into the range of the first sliced file, and an item describing this mapping relation is added to the slicing task list. Through this step, all the stream media packages are placed into the range of one or more sliced files, and one slicing task list comprising one or more items is generated, in which one item corresponds to one sliced file and the serial numbers of the stream media packages corresponding to the sliced file.

Step 104c, the center node of the IPTV media delivery system creates one or more slicing threads according to the slicing task list, partitions all the stream media packages into network transport stream media packages according to the network transport protocol followed by the interactive personal television media delivery system, and writes them into corresponding sliced files.

In order to speed up the slicing process, one or more slicing threads may be created according to the slicing task list, and each thread processes one or more sliced files. According to the slicing task list determined in step 104b, the location of the stream media package corresponding to the sliced file in the stream media source file is inquired, and the stream media package is read out from the location; the stream media package is partitioned into network transport stream media packages according to the network transport protocol followed by the interactive personal television delivery system; then the network transport stream media packages are written into the corresponding sliced file.

The network transport protocol may be the Real Time Transport Protocol (RTP), the Session Description Protocol (SDP), etc.. The operation of partitioning the stream media package into the network transport stream media packages according to the network transport protocol is to divide and encapsulate the stream media packages according to these network transport protocols, and the encapsulating method is identical to that in the prior art.

As to other slicing strategies, the slicing task list is consisted in different ways. For example, using the equal-space-size strategy is to place all the stream media packages into one or more sliced files according to the space size occupied by the stream media packages.

Step 105, the center node and the edge nodes of the IPTV media delivery system store the sliced files having been sliced using the sliced file storage strategy.

According to the sliced file storage strategy determined in Step 103, the sliced files having been sliced are stored at the center node or the edge nodes of the IPTV media delivery system; for the convenience of user access, an index file with respect to slicing and storing condition may also be generated, and the index file indicates the play list of the sliced file, the name of the stream media source file, the size of the stream media source file, the number of the sliced files contained, the size of each sliced file, and the storage node of each sliced file, etc.. After being generated, the index file is stored at the center node or the edge nodes of the IPTV media delivery system. When a user wants to play a certain stream media source file, the user terminal needs to acquire the index file corresponding to the stream media source file; then to obtain the storage position of each sliced file from the index file and to download the sliced file from that storage position.

Above description is only to illustrate the preferable embodiments of the present invention rather than to limit the scope of the present invention. Those skilled in the art should be able to consider that selecting different slicing strategies, different sliced file storage strategies, different slicing methods, different network transport protocols for encapsulating the stream media package, and different methods for compositing the index file and other alteration and replacement based on the technical scheme and the idea of the present invention shall fall into the scope of the present invention.

## Claims

1. A content publishing and storing method for the interactive personal television media delivery system, **characterized in that** the method comprises the following steps:
A, obtaining a slicing strategy of a stream media source file and a sliced file storage strategy;
B, slicing the stream media source file using the slicing strategy, and storing the sliced files using the sliced file storage strategy.

2. The content publishing and storing method for the interactive personal television media delivery system according to Claim 1, **characterized in that** before step A, the method further comprises: obtaining the basic information of the stream media source file, wherein the basic information of the stream media source file comprises one or more of the following items: the space size of the stream media source file, or the number of media streams contained in the stream media source file, or the play time of each media stream, or the format type of each media stream, or the play time of the whole source file.

3. The content publishing and storing method for the interactive personal television media delivery system according to claim 1, **characterized in that** after step B, the method further comprises: storing the information of the sliced files into a file and storing the file into the interactive personal television media delivery system.

4. The content publishing and storing method for the interactive personal television media delivery system according to claim 1, **characterized in that** in step A, the slicing strategy is an equal-time-length slicing strategy.

5. The content publishing and storing method for the interactive personal television media delivery system according to claim 1, **characterized in that** in step A, the slicing strategy is an equal-space-size slicing strategy.

6. The content publishing and storing method for the interactive personal television media delivery system according to claim 1, **characterized in that** in step A, the sliced file storage strategy is a specifying-node strategy, or a heat-statistic-based node selecting strategy, or an all-node strategy.

7. The content publishing and storing method for the interactive personal television media delivery system according to Claim 4, **characterized in that** in step B, slicing the stream media source file using the slicing strategy comprises: reading decoding flags of all stream media packages in the stream media source file; placing the stream media packages into the range of one or more sliced files according to timestamps in the decoding flags of all the stream media packages and generating a slicing task list accordingly; creating one or more slicing threads according to the slicing task list, partitioning all the stream media packages into network transport stream media packages and writing them into corresponding sliced files.

8. The content publishing and storing method for the interactive personal television media delivery system according to Claim 7, **characterized in that** partitioning all the stream media packages into the network transport stream media packages comprises partitioning the stream media packages into the network transport stream media packages according to a network transport protocol followed by the interactive personal television media delivery system.
